# FASCICULE DE BREVET EUROPEEN

(11) **EP 3 221 373 B1**
(45) Date de publication et mention de la délivrance du brevet: **12.09.2018**
(21) Numéro de dépôt: 15808725.4
(22) Date de dépôt: 17.11.2015
(51) Int. Cl.: C08F 236/04, C08F 236/06, C08F 8/12

(54) **COMPOSITION DE CAOUTCHOUC COMPRENANT UN COPOLYMÈRE POLYÉNIQUE FONCTIONNALISÉ PHOSPHONATE, ET UTILISATION D'UN TEL COPOLYMÈRE POUR AMÉLIORER LES INTERACTIONS CHARGE- ÉLASTOMÈRE DIÉNIQUE**
KAUTSCHUKZUSAMMENSETZUNG MIT EINEM PHOSPHONATFUNKTIONALISIERTEN POLYENCOPOLYMER UND VERWENDUNG SOLCH EINES COPOLYMERS ZUR VERBESSERUNG VON FÜLLER-DIENELASTOMER-WECHSELWIRKUNGEN
RUBBER COMPOSITION COMPRISING A PHOSPHONATE-FUNCTIONALIZED POLYENE COPOLYMER, AND USE OF SUCH A COPOLYMER FOR IMPROVING FILLER-DIENE ELASTOMER INTERACTIONS

(30) Priorité: 17.11.2014 FR 1461069
(43) Date de publication de la demande: 27.09.2017
(73) Titulaire: Compagnie Générale des Etablissements Michelin, 63000 Clermont-Ferrand (FR)
(72) Inventeur: RANNOUX, Claire, CH-1110 MORGES (CH); MATMOUR, Rachid, 63040 Clermont Ferrand Cedex 9 (FR); SALIT, Anne-Frédérique, 63040 Clermont Ferrand Cedex 9 (FR); LOUBAT, Cédric, 34160 Castries (FR); BOUTEVIN, Gilles, 34160 Castries (FR)
(74) Mandataire: Gandon-Pain, Sylvie
(86) Numéro de dépôt international: PCT/FR2015/053097
(87) Numéro de publication internationale: WO 2016/079411

(56) Documents cités:
- EP-A1- 0 278 029
- WO-A1-2006/114125

## Description

L'invention concerne des compositions comprenant des copolymères polyéniques fonctionnalisés phosphonate et leurs utilisations.

Les polymères phosphorés ont récemment acquis un intérêt croissant en raison de leur utilité dans une large gamme d'applications comme par exemple les piles à combustible, les membranes électrolytes (membranes échangeuses de cation), les retardateurs de flamme, les additifs pour revêtement, les biomatériaux, en particulier en applications orthopédiques, la solubilisation de médicaments, par exemple hydrogels pour la libération de médicaments, les promoteurs de prolifération cellulaire, les agents d'inhibition de la corrosion dans les systèmes de refroidissement, parmi d'autres.
Plus spécifiquement, il a été découvert que l'introduction de fonctions dérivées de l'acide phosphonique sur des élastomères utilisés dans des compositions pour pneumatiques permet d'améliorer les interactions entre la gomme et les charges.
Plusieurs approches ont déjà été envisagées pour obtenir des polymères diéniques fonctionnalisés avec des fonctions phosphonates.
Ainsi, la copolymérisation radicalaire d'un diène et de vinyl phosphonate a été envisagée (Journal of Polymer Science (1952), 8, 255-6 ; FR 1403732). Toutefois, les auteurs rapportent des difficultés pour introduire le monomère phosphonate dans la chaine de polymère.
D'autres proposent de modifier le polymère après polymérisation. Ces procédés nécessitent deux étapes : polymérisation puis post modification. La modification post-polymérisation peut par exemple être une hydrophosphorylation (Advanced Synthesis&Catalysis (2008), 350, (3), 431-438 ; les catalyseurs utilisés sont coûteux), une addition radicalaire de HS-(CH₂)₃-PO(OC₂H₅)₂ (Polym. Bull. 1998, 41, 145-151 ; un tel procédé fonctionne principalement sur les polymères diéniques riches en fonction 1,2), une addition de phosphonate d'éthyle HPO(OEt)₂ sur les insaturations carbone-carbone d'un polybutadiène (European Polymer Journal, Volume 19 Issue 12 Pages 1159-65 1983 ; on observe des réactions parasites de réticulation).
D'autres encore proposent une fonctionnalisation en bout de chaîne (European Polymer Journal, Volume 17 Issue 4, P407-11 1981) avec pour inconvénient qu'une seule fonction peut être introduite par chaîne.
La demande WO 2006/114125 A1 concerne une composition de caoutchouc comprenant au moins un polymère diénique, au moins une charge renforçante de silice et au moins un polycarboxylate modifié. L'utilisation de copolymères polyéniques fonctionnalisés phosphonate n'y est pas décrite ou suggérée.
Le brevet EP 0 278 029 décrit des (hydroxy)phosphinyle alkyle acrylates ou des (dihydroxy)phosphinyle alkyle acrylates. Ces composés peuvent être utilisés dans la préparation de composition polymérique faisant intervenir la réaction dudit phosphinyle alkyle acrylate avec un composé 1,2-éthylénique polymérisable. Toutefois, aucune utilisation de ces composés pour une application dans le domaine des compositions de caoutchouc n'a été envisagée.
Ainsi, l'invention propose de nouvelles compositions de caoutchouc comprenant des polymères polyéniques fonctionnalisés porteur de fonctions phosphonates et une méthode de synthèse simple de tels polymères. Le procédé de synthèse permet d'obtenir en une étape un polymère polyénique possédant des motifs phosphonate ou acide phosphonique répartis le long de la chaîne.

### Définitions :

Par groupement « (C₁-C₆)alkylène » ou « (C₁-C₆)alcanediyle », on entend, au sens de la présente invention, une chaîne hydrocarbonée divalente, linéaire ou ramifiée, comprenant 1 à 6 atomes de carbone, comme par exemple, un groupement méthylène, éthylène, propylène, butylène, pentylène ou encore hexylène. Ce groupement peut en outre être substitué.
Par groupement « (C₁-C₅)alkylène contenant au moins un hétéroatome », on entend, au sens de la présente invention, une chaîne hydrocarbonée divalente, linéaire ou ramifiée, comprenant 1 à 5 atomes de carbone et au moins 1 hétéroatome. Ce groupement peut en outre être substitué. L'hétéroatome est avantageusement choisi parmi O, S et N. Avantageusement, le groupement comprend au plus deux hétéroatomes. Dans le cas où l'hétéroatome est l'azote, celui-ci sera en outre substitué par un atome d'hydrogène ou un radical (C₁-C₆)alkyle.
Par groupement « (C₁-C₆)alkyle », on entend, au sens de la présente invention, une chaîne hydrocarbonée saturée, linéaire ou ramifiée, comportant 1 à 6, de préférence 1 à 4, atomes de carbone. A titre d'exemple, on peut citer les groupes méthyle, éthyle, propyle, butyle, pentyle ou encore hexyle
Par « phosphonate » on entend, au sens de la présente invention, une fonction P(O)OR₁OR₂ où R₁, R₂, identiques ou différents, représentent chacun H ou un alkyle en C₁-C₆. Ainsi, par abus de langage, le terme phosphonate englobe également la fonction acide phosphonique.
« pce » signifie parties en poids pour cent parties d'élastomère total, donc y compris le copolymère polyénique porteur de groupements fonctionnels phosphonate.
Tout intervalle de valeurs désigné par l'expression « entre a et b » représente le domaine de valeurs allant de plus de a à moins de b (c'est-à-dire bornes a et b exclues) tandis que tout intervalle de valeurs désigné par l'expression « de a à b » signifie le domaine de valeurs allant de a à b (c'est-à-dire incluant les bornes strictes a et b).

La composition de caoutchouc de la présente invention comprend un copolymère polyénique fonctionnalisé phosphonate caractérisé en ce qu'il comprend dans sa chaine linéaire principale des unités insaturées issues d'au moins un monomère polyène conjugué et des unités substituées par une fonction -C(O)O-A-P(O)OR₁OR₂, dans laquelle R₁, R₂, identiques ou différents, représentent chacun H ou un alkyle en C₁-C₆ et A représente un radical (C₁-C₆)alkylène ou un radical (C₁-C₅)alkylène contenant au moins un hétéroatome.
Les unités substituées par une fonction -C(O)O-A-P(O)OR₁OR₂ sont également dénommées unités fonctionnelles phosphonate.
Selon l'invention, le radical alkylène peut être substitué par un ou plusieurs radicaux -X-(R₃)(R₄)ₙ, où :
X représente un hétéroatome(s) choisis parmi O, S et N
R₃, R₄, identiques ou différents, représentent chacun un atome d'hydrogène ou un radical (C₁-C₆)alkyle
n représente 0 ou 1 en fonction de la valence de l'hétéroatome.
A représente avantageusement un radical (C₁-C₆)alkylène non substitué, en particulier un radical méthylène ou éthylène.

Avantageusement, R₁, R₂, identiques ou différents, représentent chacun H ou CH₃

Dans le copolymère selon l'invention, les unités substituées sont avantageusement issues d'un monomère répondant à la formule (I) suivante : 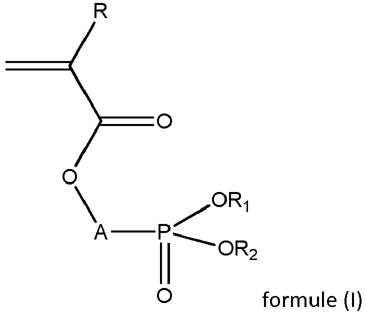 dans laquelle,
R représente H ou CH₃,
A, R₁, R₂, sont tels que définis précédemment

Ces monomères sont disponibles commercialement ou peuvent être synthétisés par l'homme du métier sur la base de ses connaissances générales. En particulier, les (méth)acrylates phosphonate ou acide phosphonique sont disponibles commercialement ou peuvent être préparés à basse température à partir de réactifs bas coût et sans risque. Par exemple : 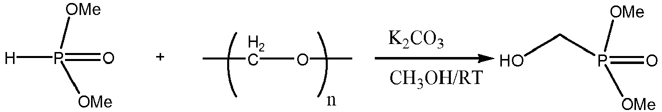 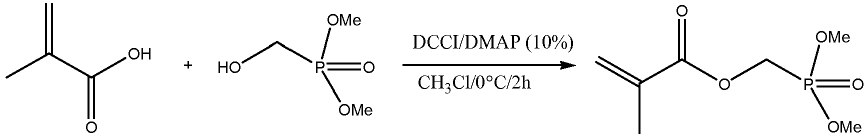 Le copolymère selon l'invention comprend avantageusement de 0,1 à 30%, en moles, d'unités substituées par une fonction -C(O)O-A-P(O)OR₁OR₂, plus avantageusement 0,1 à 20%, en moles, encore plus avantageusement 1 à 20%, en moles, desdites unités.

Le monomère polyène conjugué est avantageusement un diène conjugué. On peut utiliser selon l'invention tout monomère diène conjugué ayant de 4 à 12 atomes de carbone. A titre de diènes conjugués conviennent notamment le butadiène-1,3, le 2-méthyl-1,3-butadiène (encore dénommé isoprène), les 2,3-di(alcoyle en C1 à C5)-1,3-butadiène tels que par exemple le 2,3-diméthyl-1,3-butadiène, 2,3-diéthyl-1,3-butadiène, 2-méthyl-3-éthyl-1,3-butadiène, le 2-méthyl-3-isopropyl-1,3-butadiène, le phényl-1,3-butadiène, le 1,3-pentadiène, le 2,4-hexadiène. On préfère tout particulièrement le butadiène-1,3 ou l'isoprène.
Selon l'invention, le monomère diène peut être inséré selon un enchainement de type 1,4 ou de type 1,2, avantageusement de manière aléatoire et indépendante.
Le copolymère selon l'invention comprend avantageusement de 1 à 99,9%, en moles, d'unités issues de monomère polyène conjugué, plus avantageusement de 1 à 95% en moles, encore plus avantageusement de 10 à 95% en moles, desdites unités.

Le copolymère peut comprendre, outre ces unités insaturées issues de monomère polyène conjugué et ces unités fonctionnelles phosphonate, des unités issues d'un autre monomère. L'autre monomère est avantageusement un monomère éthylénique, en particulier :
- un composé vinylaromatique ayant de 8 à 20 atomes de carbone, comme par exemple le styrène, l'ortho-, méta-, para-méthylstyrène, le divinybenzène, le vinylnaphtalène, de préférence le styrène
- un monomère nitrile vinylique ayant de 3 à 12 atomes de carbone, tel que l'acrylonitrile ou le méthacrylonitrile ou leurs mélanges
- un monomère ester acrylique dérivé de la réaction d'un acide acrylique ou d'un acide méthacrylique avec un alcool ayant 1 à 12 atomes de carbone, comme par exemple l'acrylate de méthyle, l'acrylate d'éthyle, l'acrylate de propyle, l'acrylate de n-butyle, l'acrylate d'isobutyle, l'acrylate d'éthyl-2 hexyle, le méthacrylate de méthyle, le méthacrylate d'éthyle, le méthacrylate de n-butyle, le méthacrylate d'isobutyle,
- un monomère ester vinylique d'acide carboxylique ayant 1 à 24 atomes de carbone, comme par exemple l'acétate de vinyle et le propionate de vinyle
- ou un mélange de ces monomères.

Le copolymère selon l'invention comprend avantageusement de 0 à 50% en moles, d'unités issues de monomère éthylénique, plus avantageusement de 0 à 30% en moles, encore plus avantageusement de 0 à 20% en moles.

Le copolymère selon l'invention peut être un copolymère bloc, statistique ou à gradient. Avantageusement, il s'agit d'un copolymère statistique qui comprend, au sein de sa chaîne linéaire principale, des unités issues d'un ou de plusieurs monomères polyène conjugué et des unités issues d'un ou plusieurs monomères substitués par une fonction -C(O)O-A-P(O)OR₁OR₂ réparties de manière statistique.

L'invention décrit également un procédé de synthèse d'un copolymère polyénique fonctionnalisé phosphonate, caractérisé en ce qu'il comprend une étape de copolymérisation (a) d'un monomère polyène conjugué et (b) d'un monomère substitué par une fonction -C(O)O-A-P(O)OR₁OR₂ où R₁, R₂ et A sont tels que définis précédemment.
Avantageusement, en outre au moins un autre monomère copolymérise lors de l'étape de copolymérisation. Cet autre monomère est tel que décrit précédemment.
La copolymérisation se fait avantageusement par voie radicalaire. Le procédé de synthèse comprend une étape de copolymérisation (a) d'un monomère polyène conjugué et (b) d'un monomère substitué par une fonction -C(O)O-A-P(O)OR₁OR₂, où A, R₁, R₂, sont tels que définis précédemment et éventuellement (c) d'un autre monomère.
La polymérisation peut être effectuée en solution, en émulsion ou en suspension. La polymérisation est avantageusement conduite en émulsion dans l'eau en présence d'un tensioactif, d'un amorceur et d'un tampon pour le pH.
Alternativement, le copolymère peut également être préparé par copolymérisation d'au moins un bloc résultant de la polymérisation du polyène conjugué et d'au moins un bloc comprenant au moins une unité substituée par une fonction -C(O)O-A-P(O)OR₁OR₂ , où A, R₁, R₂, sont tels que définis précédemment.
Le cas échéant, le procédé comprend, suite à l'étape de polymérisation, une étape d'hydrolyse, complète ou partielle, des fonctions P(O)OR₁OR₂. Ainsi, les fonctions phosphonate peuvent être partiellement ou totalement, avantageusement partiellement, hydrolysées post polymérisation pour conduire notamment au copolymère polyénique porteur de fonction monoacide phosphonique. L'hydrolyse peut par exemple être réalisée par ajout d'un halogénure alcalin puis d'un alcool.
Ce procédé permet d'introduire un nombre significatif de fonctions phosphonate, le long de la chaîne du polyène, d'une manière simple et peu coûteuse.

Le copolymère selon l'invention est utilisé dans une composition de caoutchouc, en particulier une composition pour pneumatiques, en tant que composant élastomérique de cette composition ou en tant qu'additif.

L'invention concerne une composition de caoutchouc, comprenant le copolymère polyénique porteur de groupements fonctionnels phosphonate selon l'invention et une charge renforçante.
La composition de caoutchouc comprend avantageusement également un deuxième polymère qui est un élastomère diénique.
Par "élastomère" du type "diénique", on rappelle ici que doit être compris de manière connue un élastomère issu au moins en partie (i.e., un homopolymère ou un copolymère) de monomères diènes (monomères porteurs de deux doubles liaisons carbone-carbone, conjuguées ou non).
Par élastomère diénique, doit être compris selon l'invention tout élastomère synthétique issu au moins en partie de monomères diènes. Plus particulièrement, par élastomère diénique, on entend tout homopolymère obtenu par polymérisation d'un monomère diène conjugué ayant 4 à 12 atomes de carbone, ou tout copolymère obtenu par copolymérisation d'un ou plusieurs diènes conjugués entre eux ou avec un ou plusieurs composés vinylaromatiques ayant de 8 à 20 atomes de carbone. Dans le cas de copolymères, ceux-ci contiennent de 20 % à 99 % en poids d'unités diéniques, et de 1 à 80 % en poids d'unités vinylaromatiques.
L'élastomère diénique est un élastomère utilisé de manière classique dans des compositions utilisables pour la fabrication de pneumatiques.
Ainsi, l'élastomère diénique de la composition conforme à l'invention est choisi préférentiellement dans le groupe des élastomères diéniques constitué par les polybutadiènes, les polyisoprènes de synthèse, le caoutchouc naturel, les copolymères de butadiène, les copolymères d'isoprène et les mélanges de ces élastomères. De tels élastomères sont plus préférentiellement choisis dans le groupe constitué par les copolymères du styrène (les copolymères de butadiène-styrène (SBR), les copolymères de butadiène-isoprène (BIR), les copolymères d'isoprène-styrène (SIR), les copolymères de butadiène-styrène-isoprène (SBIR)), les polybutadiènes (BR), les polyisoprènes (IR) et le caoutchouc naturel (NR).
La composition de caoutchouc comprend avantageusement plus de 70 pce du copolymère polyénique fonctionnalisé phosphonate.

La composition comprend également, une charge renforçante.
On peut utiliser tout type de charge renforçante connue pour ses capacités à renforcer une composition de caoutchouc utilisable pour la fabrication de pneumatiques, par exemple une charge organique telle que du noir de carbone, une charge inorganique renforçante telle que de la silice, ou encore un coupage de ces deux types de charge, notamment un coupage de noir de carbone et de silice.
Comme noirs de carbone conviennent tous les noirs de carbone conventionnellement utilisés dans les pneumatiques (noirs dits de grade pneumatique).
Par "charge inorganique renforçante", doit être entendu dans la présente demande, par définition, toute charge inorganique ou minérale (quelles que soient sa couleur et son origine (naturelle ou de synthèse), encore appelée charge "blanche", charge "claire" voire "charge non noire" ("non-black filler") par opposition au noir de carbone, capable de renforcer à elle seule, sans autre moyen qu'un agent de couplage intermédiaire, une composition de caoutchouc destinée à la fabrication de pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface.
L'état physique sous lequel se présente la charge inorganique renforçante est indifférent, que ce soit sous forme de poudre, de microperles, de granulés, de billes ou toute autre forme densifiée appropriée. Bien entendu on entend également par charge inorganique renforçante des mélanges de différentes charges inorganiques renforçantes, en particulier de charges siliceuses et/ou alumineuses hautement dispersibles telles que décrites ci-après.
Comme charges inorganiques renforçantes conviennent notamment des charges minérales du type siliceuse, en particulier de la silice (SiO2), ou du type alumineuse, en particulier de l'alumine (Al2O3). La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g.
Pour coupler la charge inorganique renforçante à l'élastomère diénique, on utilise de manière connue un agent de couplage (ou agent de liaison) au moins bifonctionnel destiné à assurer une connexion suffisante, de nature chimique et/ou physique, entre la charge inorganique (surface de ses particules) et l'élastomère diénique, en particulier des organosilanes ou des polyorganosiloxanes bifonctionnels. On utilise notamment des silanes polysulfurés, dits "symétriques" ou "asymétriques" selon leur structure particulière, tels que décrits par exemple dans les demandes WO03/002648 (ou US 2005/016651) et WO03/002649 (ou US 2005/016650). Enfin, l'homme du métier comprendra qu'à titre de charge équivalente de la charge inorganique renforçante décrite dans le présent paragraphe, pourrait être utilisée une charge renforçante d'une autre nature, notamment organique, dès lors que cette charge renforçante serait recouverte d'une couche inorganique telle que silice, ou bien comporterait à sa surface des sites fonctionnels, notamment hydroxyles, nécessitant l'utilisation d'un agent de couplage pour établir la liaison entre la charge et l'élastomère.
Le taux de charge renforçante totale (noir de carbone et/ou charge inorganique renforçante telle que silice) est compris entre 0 et 120 pce, plus préférentiellement entre 0 et 70 pce, plus particulièrement va de 5 à 70 pce et plus préférentiellement également entre 0 et 50 pce et très préférentiellement va de 5 à 50 pce, l'optimum étant bien entendu différent selon les applications particulières visées.

Les compositions de caoutchouc conformes à l'invention peuvent comporter également tout ou partie des additifs usuels habituellement utilisés dans les compositions d'élastomères destinées à la fabrication de pneumatiques, comme par exemple des pigments, des agents de protection tels que cires anti-ozone, anti-ozonants chimiques, anti-oxydants, des agents anti- fatigue, des résines renforçantes ou plastifiantes, des accepteurs (par exemple résine phénolique novolaque) ou des donneurs de méthylène (par exemple HMT ou H3M) tels que décrits par exemple dans la demande WO 02/10269, un système de réticulation à base soit de soufre, soit de donneurs de soufre et/ou de peroxyde et/ou de bismaléimides, des accélérateurs de vulcanisation, des activateurs de vulcanisation, des promoteurs d'adhésion tels que des composés à base de cobalt, des agents plastifiants, préférentiellement non aromatiques ou très faiblement aromatiques choisis dans le groupe constitué par les huiles naphténiques, paraffiniques, huiles MES, huiles TDAE, les plastifiants éthers, les plastifiants esters (par exemple les trioléates de glycérol), les résines hydrocarbonées présentant une haute Tg, de préférence supérieure à 30°C, telles que décrites par exemple dans les demandes WO 2005/087859, WO 2006/061064 et WO 2007/017060, et les mélanges de tels composés.

L'invention a également pour objet un pneumatique qui incorpore dans au moins un de ses éléments constitutifs une composition de caoutchouc, avantageusement renforcée, selon l'invention.
L'invention a également pour objet l'utilisation d'un copolymère polyénique fonctionnalisé phosphonate selon l'invention dans une composition pour pneumatique comprenant en outre un élastomère diénique et une charge renforçante, pour améliorer les interactions entre la charge et l'élastomère diénique compris dans ladite composition pneumatique.

### EXEMPLES DE REALISATION DE L'INVENTION

### Mesures utilisées :

### Résonance Magnétique Nucléaire (RMN) :

### Copolymères synthétisés en émulsion :

Les déterminations des taux des différentes unités monomères et de leurs microstructures au sein du copolymère sont réalisées par une analyse RMN. Les spectres sont acquis sur un spectromètre 500 MHz BRUKER équipé d'une sonde " large bande " BBIz-grad 5 mm. L'expérience RMN 1H quantitative, utilise une séquence simple impulsion 30° et un délai de répétition de 3 secondes entre chaque acquisition. Les échantillons sont solubilisés dans le chloroforme deutéré (CDCl3) ou le méthanol deutéré (MeOD).

### Copolymères synthétisés en solution :

Les analyses RMN ¹H sont réalisées avec un Spectromètre Bruker Avance 300 (300 MHz), sonde QNP 1H, 31P, 19F et 13C. Les échantillons sont solubilisés dans le chloroforme deutéré (CDCl3).

### Chromatographie d'exclusion stérique (SEC) :

On utilise la chromatographie d'exclusion stérique ou SEC (Size Exclusion Chromatography). La SEC permet de séparer les macromolécules en solution suivant leur taille à travers des colonnes remplies d'un gel poreux. Les macromolécules sont séparées suivant leur volume hydrodynamique, les plus volumineuses étant éluées en premier.
Sans être une méthode absolue, la SEC permet d'appréhender la distribution des masses molaires d'un polymère. A partir de produits étalons commerciaux, les différentes masses molaires moyennes en nombre (Mn) et en poids (Mw) peuvent être déterminées et l'indice de polymolécularité ou polydispersité (Ip = Mw/Mn) calculé via un étalonnage dit de MOORE. Préparation du polymère: Il n'y a pas de traitement particulier de l'échantillon de polymère avant analyse. Celui-ci est simplement solubilisé, dans du (tétrahydrofuranne + 1%vol. de diisopropylamine + 1%vol. de triéthylamine + 0,1%vol. d'eau distillée) ou dans du chloroforme, à une concentration d'environ 1 g/l. Puis la solution est filtrée sur filtre de porosité 0,45µm avant injection.
Analyse SEC: L'appareillage utilisé est un chromatographe « WATERS alliance ». Le solvant d'élution est du tétrahydrofuranne + 1%vol. de diisopropylamine + 1%vol. de triéthylamine ou du chloroforme selon le solvant utilisé pour la mise en solution du polymère. Le débit est de 0,7 ml/min, la température du système de 35°C et la durée d'analyse de 90 min. On utilise un jeu de quatre colonnes WATERS en série, de dénominations commerciales « STYRAGEL HMW7 », « STYRAGEL HMW6E » et deux « STYRAGEL HT6E ».
Le volume injecté de la solution de l'échantillon de polymère est 100 µl. Le détecteur est un réfractomètre différentiel « WATERS 2410» et le logiciel d'exploitation des données chromatographiques est le système « WATERS EMPOWER».
Les masses molaires moyennes calculées sont relatives à une courbe d'étalonnage réalisée à partir de polystyrènes (PS) étalons commerciaux « PSS READY CAL-KIT ».

Sauf indication contraire, tous les pourcentages indiqués sont des pourcentages en masse.

### Exemples d'obtention de copolymères fonctionnels phosphonate ou acide phosphonique

### Exemple 1: Copolymérisation radicalaire en solution isoprène/ dimethyl(methacryloyloxy)-methyl phosphonate (MAPC1)

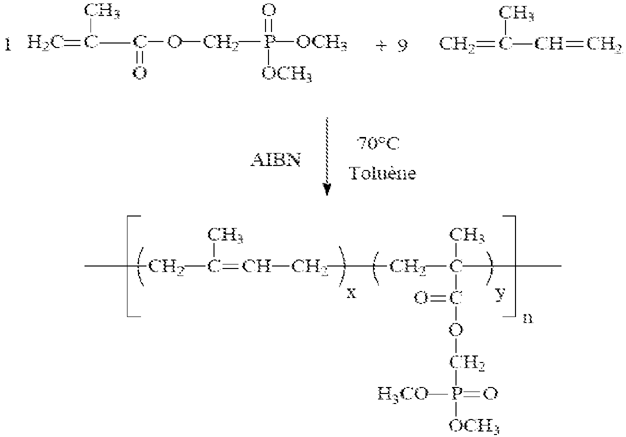

Dans un réacteur autoclave sont introduits sous un courant d'argon 38g de dimethyl(methacryloyloxy)-methyl phosphonate, 112g d'isoprène, 100g de toluène et 3,21g d'azobisisobutyronitrile (AIBN). Le mélange réactionnel est chauffé et agité à 70°C et pendant 1 nuit. La conversion en polymère est de 45%. Le copolymère est précipité dans le méthanol.

La composition du copolymère est déterminée par RMN. Le copolymère a donc la composition suivante : 84%mol d'isoprène - 16%mol de MAPC1.

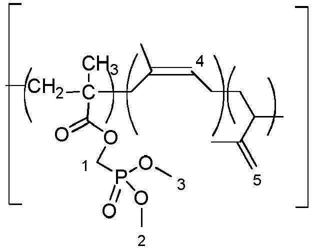

Le polymère est analysé en RMN ¹H (CDCl3). Les données sont reportées dans le tableau suivant :

**Tableau 1**

| Proton N° | Déplacement chimique (ppm) | Nombre de protons |
|---|---|---|
| H1 | 4.15-4.55 | 2 |
| H2, H3 | 3.75-4 | 6 |
| H4 H5 | 4.55-5.40 | 3 |

Le polymère est analysé en RMN ³¹P (CDCl3). Les données sont reportées dans le tableau suivant :

**Tableau 2**

| | Déplacement chimique (ppm) | Nombre de phosphore |
|---|---|---|
| P | 20.5-24 | 1 |

La masse molaire du copolymère est déterminée par SEC : Mn (eq-PS) = 3 660 g/mol ; Mw (eq-PS) = 5 980 g/mol ; Ip = 1,63. Il y a environ 7 fonctions phosphonate de méthyle par chaîne.

### Exemple 2 : monohydrolyse du copolymère poly(isoprène-co-MAPC1 ME)

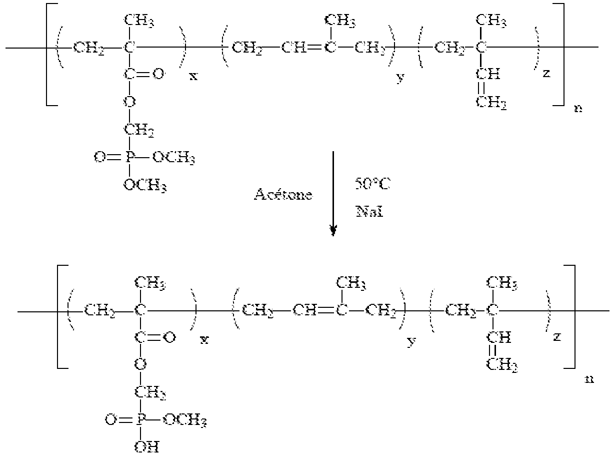

37g de copolymère poly(isoprène-co-MAPC1 ME) sont solubilisés dans l'acétone. 11,5g de Nal sont ajoutés. Le milieu réactionnel est agité et chauffé à 50°C. La réaction est suivie en cinétique par RMN. Lorsque la conversion est totale (diminution d'un facteur 2 de la valeur d'intégration du-POCH3 à 3,8 ppm en RMN1H), le polymère, qui précipite sous forme de sels de sodium, est récupéré puis lavé à l'acétone pour éliminer les résidus de Nal. Le polymère est ensuite solubilisé dans le méthanol puis de l'amberlite IR-120 est ajouté. Le milieu réactionnel est agité pendant 1h à température ambiante puis filtré pour éliminer l'amberlite et enfin évaporé. Le produit final est un liquide visqueux obtenu avec un rendement de 90%.

La RMN ¹H et ³¹P permettent de confirmer la structure du produit (spectre réalisé dans le MeOD)

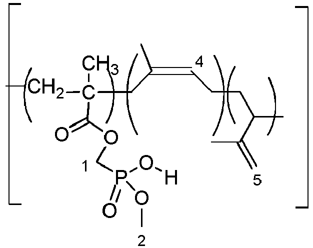

Les données sont reportées dans le tableau suivant :

**Tableau 3**

| Proton N° | Déplacement chimique (ppm) | Nombre de protons |
|---|---|---|
| H1 | 4.15-4.50 | 2 |
| H2 | 3.65-3.95 | 3 |
| H4 H5 | 4.65-5.40 | 3 |

Le polymère est analysé en RMN ³¹P. Les données sont reportées dans le tableau suivant :

**Tableau 4**

| | Déplacement chimique (ppm) | Nombre de phosphore |
|---|---|---|
| P | 18 | 1 |

La masse molaire du copolymère est déterminée par SEC : Mn (eq-PS) = 3 660 g/mol ; Mw (eq-PS) = 5 980 g/mol ; Ip = 1,63. Il y a environ 7 fonctions phosphonate de méthyle par chaîne.

### Exemple 3 : Copolymérisation radicalaire en émulsion

### styrène/butadiène/dimethyl(methacryloyloxy)-methyl phosphonate (MAPC1)

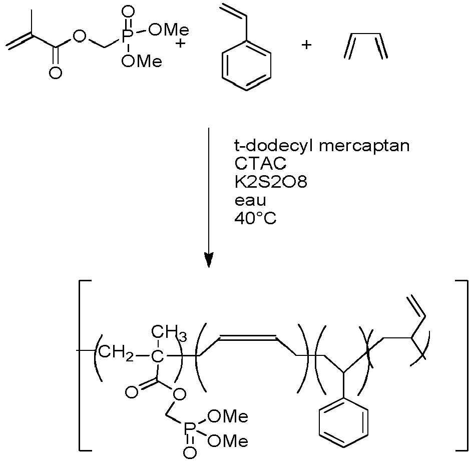

La polymérisation radicalaire en émulsion est effectuée dans une bouteille capsulée sous agitation modérée et sous atmosphère inerte d'azote.

Dans une bouteille sont introduits 0,120g de K2S2O8 et 0.5g de Chlorure d'hexadécyltriméthylammonium. La bouteille est capsulée puis barbotée à l'azote pendant 10 min. Sont ensuite introduits successivement dans la bouteille les composés et solutions suivants (Ces solutions ayant été barbotées pour éliminer toute trace d'oxygène) :
- 90 mL d'eau
- 127µL d'une solution à 0.7 mol/L de tert-dodecyl mercaptan dans le styrène
- 2,2 mL supplémentaire de styrène
- 2,4 mL de MAPC1
- 8,8 mL de butadiène

Le milieu réactionnel est mis à agiter et chauffé à 40°C. La polymérisation est stoppée au bout de 60% de conversion par l'ajout de 1mL d'une solution de résorcinol à 100g/L dans l'eau.

Un mélange acétone/méthanol 50/50 est ajouté au milieu réactionnel pour coaguler le copolymère. Le copolymère est séché par étuvage sous vide (200 torr) à 50 °C pendant 1 jour.

Le copolymère est analysé en RMN. Les résultats sont reportés dans le tableau suivant :

**Tableau 5**

| Motifs | δ (¹H) en ppm | δ (¹³C) en ppm | δ (³¹P) en ppm | Nombre de proton |
|---|---|---|---|---|
| CH₃-O-P | 3,4 à 3,7 | 53,0 | 21,1 | 6 |
| O-CH₂-P | 3,7 à 4,4 | 54,8 et 56,3 | | 2 |
| PB1-2 | 4,6 à 4,9 | 114 | | 2 + 1 |
| PB1-4 et PB1-2 | 4,9 à 5,5 | 142,8 à 124,5 | | 2 + 1 |
| Styrène | 6,8 à 7,2 | 125,8 à 127,6 | | 5 |

| | | | | |
|---|---|---|---|---|
| PB1-2 : polybutadiène, enchaînements de type 1,2, PB1-4 : polybutadiène, enchaînements de type 1,4 | | | | |

Le polymère est analysé en SEC : Mn = 82814 g/mol (eq PS)

### Exemple 4 : hydrolyse totale du copolymère poly(styrène-co-butadiène-co-MAPC1 ME)

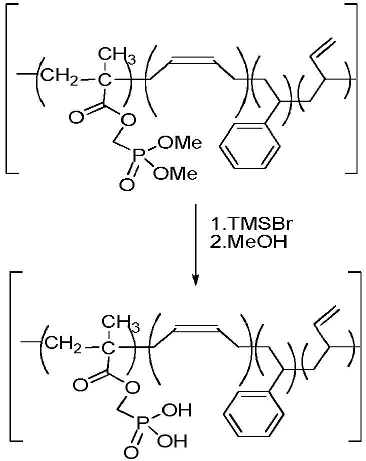

8,4g de poly (styrène-co-butadiene-co-MAPCl ME) sont solubilisés dans le dichlorométhane (80mL) sous atmosphère inerte et 4,18g (0,0273mol) de bromure de trimethyl silyle sont ajoutés au milieu réactionnel.

Le milieu réactionnel est chauffé à 40°C. Une fois que la conversion est totale (suivi RMN), 500mL de méthanol sont ajoutés pour coaguler le polymère. Le polymère est récupéré puis lavé 3 fois au méthanol.

Le polymère est analysé en RMN.

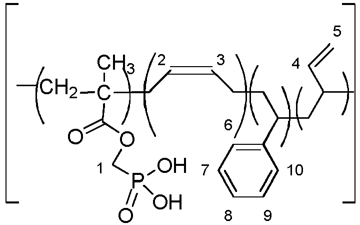

Les données sont reportées dans le tableau suivant :

**Tableau 6**

| Proton N° | Déplacement chimique (ppm) | Nombre de protons |
|---|---|---|
| H1 | 4.15-4.40 | 2 |
| H2, H3, H4 | 5.10-6.25 | 3 |
| H5 | 4.75-5.05 | 2 |
| H6, H7, H8, H9, H10 | 6.9-7.4 | 5 |

Le polymère est analysé en SEC : Mn = 82000 g/mol (eq PS)

## Revendications

1. Composition de caoutchouc, comprenant :
- un copolymère polyénique fonctionnalisé phosphonate, comprenant dans sa chaine linéaire principale des unités insaturées issues d'au moins un monomère polyène conjugué et des unités substituées par une fonction -C(O)O-A-P(O)OR₁OR₂, dans laquelle R₁, R₂, identiques ou différents, représentant chacun un H ou un alkyle en C₁-C₆ et A représente un radical (C₁-C₆)alkylène ou un radical (C₁-C₅)alkylène contenant au moins un hétéroatome, et ;
- une charge renforçante.

2. Composition de caoutchouc selon la revendication 1, **caractérisé en ce que** les unités substituées du copolymère polyénique fonctionnalisé phosphonate sont issues d'un monomère répondant à la formule (I) suivante : 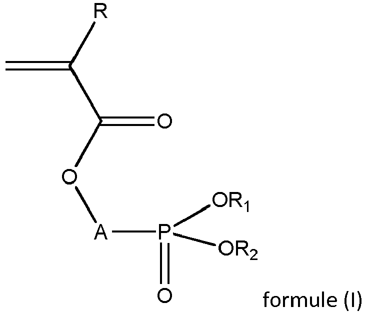 dans laquelle,
R représente H ou CH₃,
A, R₁, R₂, sont tels que définis dans la revendication 1.

3. Composition de caoutchouc selon la revendication 1 ou 2, **caractérisé en ce que** le monomère polyène conjugué du copolymère polyénique fonctionnalisé phosphonate est un monomère diène conjugué, en particulier le butadiène-1,3 ou l'isoprène.

4. Composition de caoutchouc selon l'une quelconque des revendications précédentes, **caractérisé en ce que** le monomère diène est inséré selon un enchainement de type 1,4 ou de type 1,2.

5. Composition de caoutchouc selon l'une quelconque des revendications précédentes, **caractérisé en ce que** le copolymère polyénique fonctionnalisé phosphonate comprend de 0,1 à 30%, en moles, d'unités substituées par une fonction -C(O)O-A-P(O)OR₁OR₂, avantageusement 0,1 à 20%, en moles, desdites unités.

6. Composition de caoutchouc selon l'une quelconque des revendications précédentes, **caractérisé en ce que** le copolymère polyénique fonctionnalisé phosphonate comprend, outre ces unités insaturées issues de monomère polyène conjugué et ces unités substituées par une fonction -C(O)O-A-P(O)OR₁OR₂, des unités issues d'un autre monomère.

7. Composition de caoutchouc selon la revendication 6, **caractérisé en ce que** l'autre monomère du copolymère polyénique fonctionnalisé phosphonate est un monomère éthylénique, en particulier :
- un composé vinylaromatique ayant de 8 à 20 atomes de carbone, tel que le styrène,
- un monomère nitrile vinylique ayant de 3 à 12 atomes de carbone,
- un monomère ester acrylique dérivé de l'acide acrylique ou de l'acide méthacrylique avec un alcool ayant 1 à 12 atomes de carbone,
- un monomère vinyle ester d'acide carboxylique ayant 1 à 24 atomes de carbone
- un mélange de ces monomères.

8. Composition de caoutchouc selon la revendication 7, caractérisé en ce le copolymère polyénique fonctionnalisé phosphonate comprend de 0 à 50% en moles, d'unités issues de monomère éthylénique.

9. Composition de caoutchouc selon l'une quelconque des revendications précédentes, **caractérisé en ce que** la charge renforçante peut être organique, inorganique, ou un mélange d'une charge organique et inorganique.

10. Composition de caoutchouc selon l'une quelconque des revendications précédentes, **caractérisé en ce que** le taux en charge renforçante est compris entre 0 et 120 pce.

11. Composition de caoutchouc selon l'une des revendications 1 à 10, **caractérisé en ce que** le copolymère polyénique fonctionnalisé phosphonate est un composant élastomérique de ladite composition.

12. Composition de caoutchouc selon l'une quelconque des revendications 1 à 11 comprenant en outre un deuxième polymère lequel est un élastomère diénique.

13. Composition de caoutchouc selon l'une quelconque des revendications 9 à 12, **caractérisé en ce qu'**un agent de couplage au moins bifonctionnel est utilisé pour coupler la charge inorganique renforçante à l'élastomère diénique.

14. Composition de caoutchouc selon la revendication 13, **caractérisé en ce que** l'agent de couplage au moins bifonctionnel est choisi parmi le groupe comprenant des organosilanes, des polyorganosiloxanes et des silanes polysulfurés.

15. Utilisation d'un copolymère polyénique fonctionnalisé phosphonate tel que défini dans l'une des revendications 1 à 8 dans une composition pour pneumatique comprenant en outre un élastomère diénique et une charge renforçante, pour améliorer les interactions entre la charge et l'élastomère diénique compris dans ladite composition pneumatique.

16. Pneumatique dont un au moins de ses éléments constitutifs comprends une composition de caoutchouc selon l'une quelconque des revendications 1 à 14.

## Patentansprüche

1. Kautschukzusammensetzung, umfassend:
- ein phosphonatfunktionalisiertes Polyen-Copolymer, das in seiner linearen Hauptkette ungesättigte Einheiten, die sich von mindestens einem konjugierten Polyen-Monomer ableiten, und Einheiten, die durch eine -C(O)O-A-P(O)OR₁OR₂-Funktion substituiert sind, umfasst, wobei R₁ und R₂ gleich oder verschieden sind und jeweils für ein H oder ein C₁-C₆-Alkyl stehen und A für einen (C₁-C₆) Alkylenrest oder einen (C₁-C₅)-Alkylenrest mit mindestens einem Heteroatom steht, und
- einen verstärkenden Füllstoff.

2. Kautschukzusammensetzung nach Anspruch 1, **dadurch gekennzeichnet, dass** sich die substituierten Einheiten des phosphonatfunktionalisierten Polyen-Copolymers von einem Monomer ableiten, das der folgenden Formel (I) entspricht: 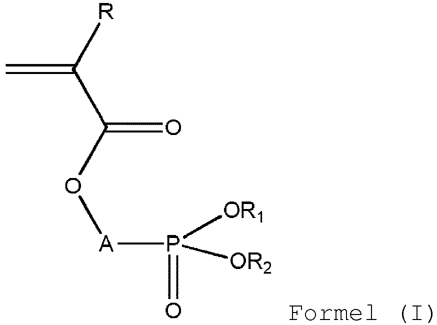 in der
R für H oder CH₃ steht,
A, R₁ und R₂ wie in Anspruch 1 definiert sind.

3. Kautschukzusammensetzung nach Anspruch 1 oder 2, **dadurch gekennzeichnet, dass** es sich bei dem konjugierten Polyen-Monomer des phosphonatfunktionalisierten Polyen-Copolymers um ein konjugiertes Dien-Monomer, insbesondere 1,3-Butadien oder Isopren, handelt.

4. Kautschukzusammensetzung nach einem der vorhergehenden Ansprüche, **dadurch gekennzeichnet, dass** das Dien-Monomer gemäß einer Verknüpfung vom 1,4-Typ oder vom 1,2-Typ insertiert ist.

5. Kautschukzusammensetzung nach einem der vorhergehenden Ansprüche, **dadurch gekennzeichnet, dass** das phosphonatfunktionalisierte Polyen-Copolymer 0,1 bis 30 Mol-% Einheiten, die durch eine -C(O)O-A-P(O)OR₁OR₂-Funktion substituiert sind, vorteilhafterweise 0,1 bis 20 Mol-% dieser Einheiten, umfasst.

6. Kautschukzusammensetzung nach einem der vorhergehenden Ansprüche, **dadurch gekennzeichnet, dass** das phosphonatfunktionalisierte Polyen-Copolymer neben diesen ungesättigten Einheiten, die sich von konjugiertem Polyen-Monomer ableiten, und diesen Einheiten, die durch eine -C(O)O-A-P(O)OR₁OR₂-Funktion substituiert sind, Einheiten, die sich von einem anderen Monomer ableiten, umfasst.

7. Kautschukzusammensetzung nach Anspruch 6, **dadurch gekennzeichnet, dass** es sich bei dem anderen Monomer des phosphonatfunktionalisierten Polyen-Copolymers um ein ethylenisches Monomer, insbesondere:
- eine vinylaromatische Verbindung mit 8 bis 20 Kohlenstoffatomen, wie Styrol,
- ein Vinylnitril-Monomer mit 3 bis 12 Kohlenstoffatomen,
- ein Acrylsäureester-Monomer, das sich von Acrylsäure oder Methacrylsäure mit einem Alkohol mit 1 bis 12 Kohlenstoffatomen ableitet,
- ein Carbonsäurevinylester-Monomer mit 1 bis 24 Kohlenstoffatomen,
- eine Mischung dieser Monomere
handelt.

8. Kautschukzusammensetzung nach Anspruch 7, **dadurch gekennzeichnet, dass** das phosphonatfunktionalisierte Polyen-Copolymer 0 bis 50 Mol-% Einheiten, die sich von ethylenischem Monomer ableiten, umfasst.

9. Kautschukzusammensetzung nach einem der vorhergehenden Ansprüche, **dadurch gekennzeichnet, dass** der verstärkende Füllstoff organisch, anorganisch oder eine Mischung aus einem organischen und anorganischen Füllstoff sein kann.

10. Kautschukzusammensetzung nach einem der vorhergehenden Ansprüche, **dadurch gekennzeichnet, dass** der Gehalt an verstärkendem Füllstoff zwischen 0 und 120 phe liegt.

11. Kautschukzusammensetzung nach einem der Ansprüche 1 bis 10, **dadurch gekennzeichnet, dass** es sich bei dem phosphonatfunktionalisierten Polyen-Copolymer um eine Elastomerkomponente der Zusammensetzung handelt.

12. Kautschukzusammensetzung nach einem der Ansprüche 1 bis 11, die außerdem ein zweites Polymer umfasst, bei dem es sich um ein Dienelastomer handelt.

13. Kautschukzusammensetzung nach einem der Ansprüche 9 bis 12, **dadurch gekennzeichnet, dass** ein mindestens bifunktionelles Kupplungsmittel zur Kupplung des verstärkenden anorganischen Füllstoffs mit dem Dienelastomer verwendet wird.

14. Kautschukzusammensetzung nach Anspruch 13, **dadurch gekennzeichnet, dass** das mindestens bifunktionelle Kupplungsmittel aus der Gruppe bestehend aus Organosilanen, Polyorganosiloxanen und Silanpolysulfiden ausgewählt ist.

15. Verwendung eines phosphonatfunktionalisierten Polyen-Copolymers gemäß einem der Ansprüche 1 bis 8 in einer Reifenzusammensetzung, die außerdem ein Dienelastomer und einen verstärkenden Füllstoff umfasst, zur Verbesserung der Wechselwirkungen zwischen dem Füllstoff und dem Dienelastomer in der Reifenzusammensetzung.

16. Reifen, wobei mindestens eines seiner Aufbauelemente eine Kautschukzusammensetzung nach einem der Ansprüche 1 bis 14 umfasst.

## Claims

1. Rubber composition, comprising:
- a phosphonate-functionalized polyene copolymer, comprising, in its main linear chain, unsaturated units resulting from at least one conjugated polyene monomer and units substituted by a -C(O)O-A-P(O)OR₁OR₂ functional group, in which R₁ and R₂, which are identical or different, each represents a H or a C₁-C₆ alkyl and A represents a (C₁-C₆)alkylene radical or a (C₁-C₅)alkylene radical containing at least one heteroatom, and;
- a reinforcing filler.

2. Rubber composition according to Claim 1, **characterized in that** the substituted units of the phosphonate-functionalized polyene copolymer result from a monomer corresponding to the following formula (I): 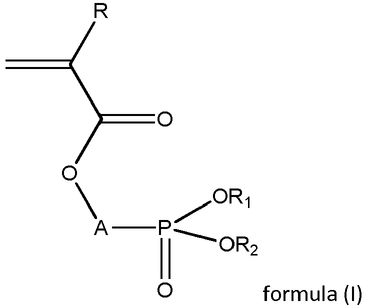 in which:
R represents H or CH₃,
A, R₁ and R₂ are as defined in Claim 1.

3. Rubber composition according to Claim 1 or 2, **characterized in that** the conjugated polyene monomer of the phosphonate-functionalized polyene copolymer is a conjugated diene monomer, in particular 1,3-butadiene or isoprene.

4. Rubber composition according to any one of the preceding claims, **characterized in that** the diene monomer is inserted according to an enchainment of 1,4- type or of 1,2- type.

5. Rubber composition according to any one of the preceding claims, **characterized in that** the phosphonate-functionalized polyene copolymer comprises from 0.1 to 30 mol% of units substituted by a -C(O)O-A-P(O)OR₁OR₂ functional group, advantageously from 0.1 to 20 mol% of the said units.

6. Rubber composition according to any one of the preceding claims, **characterized in that** the phosphonate-functionalized polyene copolymer comprises, besides these unsaturated units resulting from conjugated polyene monomer and these units substituted by a -C(O)O-A-P(O)OR₁OR₂ functional group, units resulting from another monomer.

7. Rubber composition according to Claim 6, **characterized in that** the other monomer of the phosphonate-functionalized polyene copolymer is an ethylenic monomer, in particular:
- a vinylaromatic compound having from 8 to 20 carbon atoms, such as styrene,
- a vinyl nitrile monomer having from 3 to 12 carbon atoms,
- an acrylic ester monomer derived from acrylic acid or from methacrylic acid with an alcohol having from 1 to 12 carbon atoms,
- a carboxylic acid vinyl ester monomer having from 1 to 24 carbon atoms,
- a mixture of these monomers.

8. Rubber composition according to Claim 7, **characterized in that** the phosphonate-functionalized polyene copolymer comprises from 0 to 50 mol% of units resulting from ethylenic monomer.

9. Rubber composition according to any one of the preceding claims, **characterized in that** the reinforcing filler can be organic, inorganic or a mixture of an organic and inorganic filler.

10. Rubber composition according to any one of the preceding claims, **characterized in that** the content of reinforcing filler is between 0 and 120 phr.

11. Rubber composition according to one of Claims 1 to 10, **characterized in that** the phosphonate-functionalized polyene copolymer is an elastomeric component of the said composition.

12. Rubber composition according to any one of Claims 1 to 11, additionally comprising a second polymer which is a diene elastomer.

13. Rubber composition according to any one of Claims 9 to 12, **characterized in that** an at least bifunctional coupling agent is used to couple the reinforcing inorganic filler to the diene elastomer.

14. Rubber composition according to Claim 13, **characterized in that** the at least bifunctional coupling agent is selected from the group consisting of organosilanes, polyorganosiloxanes and silane polysulphides.

15. Use of a phosphonate-functionalized polyene copolymer as defined in one of Claims 1 to 8 in a tyre composition additionally comprising a diene elastomer and a reinforcing filler, for improving the interactions between the filler and the diene elastomer included in the said tyre composition.

16. Tyre, at least one of the constituent components of which comprise a rubber composition according to any one of Claims 1 to 14.
